(19) Europäisches Patentamt / European Patent Office / Office européen des brevets

(11) **EP 4 251 473 B1**

(12) **FASCICULE DE BREVET EUROPEEN**

(45) Date de publication et mention de la délivrance du brevet:
**03.09.2025 Bulletin 2025/36**

(21) Numéro de dépôt: **21806297.4**

(22) Date de dépôt: **22.11.2021**

(51) Classification Internationale des Brevets (IPC):
**B60Q 1/14** *(2006.01)*

(52) Classification Coopérative des Brevets (CPC):
**B60Q 1/143;** B60Q 2300/45

(86) Numéro de dépôt international:
**PCT/EP2021/082554**

(87) Numéro de publication internationale:
**WO 2022/112192 (02.06.2022 Gazette 2022/22)**

(54) **PROCÉDÉ DE CONTRÔLE D'UN SYSTÈME D'ÉCLAIRAGE METTANT EN OEUVRE UNE FONCTION D'ÉCLAIRAGE NON ÉBLOUISSANT**

VERFAHREN ZUR STEUERUNG EINES BELEUCHTUNGSSYSTEMS MIT EINER BLENDFREIEN BELEUCHTUNGSFUNKTION

METHOD FOR CONTROLLING A LIGHTING SYSTEM USING A NON-GLARE LIGHTING FUNCTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2020 FR 2012394**

(43) Date de publication de la demande:
**04.10.2023 Bulletin 2023/40**

(73) Titulaire: **VALEO VISION**
**93012 Bobigny Cedex (FR)**

(72) Inventeur: **BENAMAR, Fatima**
**93012 Bobigny - Cedex (FR)**

(74) Mandataire: **Valeo Visibility**
**Service Propriété Industrielle**
**c/o Valeo Vision**
**34, rue Saint André**
**93012 Bobigny (FR)**

(56) Documents cités:
**EP-A1- 2 127 944     DE-A1- 102007 048 717**
**FR-A1- 3 055 981**

## EP 4 251 473 B1

**Description**

L'invention concerne le domaine de l'éclairage automobile. Plus précisément, l'invention concerne un procédé de contrôle d'un système d'éclairage d'un véhicule automobile mettant en œuvre une fonction d'éclairage anti-éblouissement.

Un véhicule automobile est usuellement équipé d'un système d'éclairage permettant d'émettre, entre autres, une fonction d'éclairage de type route réglementaire, capable d'éclairer de façon optimale la route en aval du véhicule.

Si ce type de faisceau permet d'accroître la visibilité du conducteur de façon satisfaisante, il peut également être une source d'inconfort pour le conducteur. En effet, le faisceau d'éclairage de type route peut atteindre un panneau de signalisation routière et y être ré-troréfléchi vers le conducteur. Cette rétroréflexion peut alors être une source d'éblouissement, en particulier si le panneau est doté de moyens de réflexion, si la puissance lumineuse du faisceau d'éclairage est particulièrement importante, si la luminosité ambiante est déjà élevée ou encore si le conducteur est sensible à l'éblouissement.

Il est connu d'équiper les véhicules automobiles d'un système de capteur pour détecter un panneau de signalisation routière sur la route et d'un contrôleur capable de commuter le système d'éclairage pour l'émission d'un faisceau non éblouissant, par exemple de type croisement, lors de la détection de ce panneau. De la sorte, on supprime la source d'éblouissement afin d'éliminer la gêne d$_u$ conducteur. D'autres procédés de contrôle d'un système d'éclairage sont connus des DE 10 2007 048717 A1, FR 3 055 981 A1 ou EP 2 127 944 A1.

Toutefois, cette solution n'est pas satisfaisante. D'une part, l'émission d'un tel faisceau non éblouissant vient également diminuer l'éclairage du reste de la route, de sorte que la visibilité du conducteur n'est plus optimale. Par ailleurs, le panneau de signalisation n'est plus éclairé et le conducteur n'est plus susceptible de le percevoir et de le comprendre. Enfin, les véhicules modernes sont usuellement équipés d'une caméra permettant de mettre en œuvre des fonctions d'assistance à la conduite, lesquelles peuvent nécessiter une lecture par la caméra du panneau. Dans ce cas, la caméra n'est pas non plus capable de lire ce panneau, du fait de l'absence d'éclairage de ce panneau, ce qui peut ainsi mettre en échec les fonctions d'assistance à la conduite.

Il existe un besoin pour une solution palliant les différents inconvénients cités, et permettant notamment l'émission d'un faisceau d'éclairage capable d'éclairer de façon optimale la route, y compris un panneau de signalisation, sans pour autant générer une source d'éblouissement pour le conducteur au niveau de ce panneau.

La présente invention se place dans ce contexte et vise à répondre à ce besoin.

A ces fins, l'invention a pour objet un procédé de contrôle d'un système d'éclairage d'un véhicule automobile, le système d'éclairage comprenant une pluralité de sources lumineuses élémentaires chacune contrôlable sélectivement pour émettre un faisceau lumineux élémentaire, les faisceaux lumineux élémentaires formant ensemble un faisceau lumineux pixélisé, le procédé comportant les étapes suivantes :

a. Détection d'un panneau de signalisation par un système de capteur du véhicule automobile ;
b. Estimation d'une durée de croisement entre l'instant de la détection du panneau de signalisation et un instant futur auquel le véhicule automobile croisera le panneau de signalisation détecté ;
c. Contrôle des sources lumineuses élémentaires du système d'éclairage du véhicule hôte pour émettre un faisceau lumineux pixélisé, une partie des sources lumineuses élémentaires étant contrôlée, en fonction de ladite durée de croisement, pour générer dans le faisceau lumineux une zone d'intensité moindre s'étendant au niveau du panneau de signalisation.

Grâce à l'invention, et en particulier grâce à l'utilisation d'un système d'éclairage capable d'émettre un faisceau lumineux pixélisé, il est possible d'éclairer la totalité de la route en aval d'un véhicule automobile, y compris au niveau d'un panneau de signalisation, tout en émettant moins de lumière au niveau de ce panneau afin d'éviter une rétroréflexion sur ce panneau qui soit éblouissante pour le conducteur. Il a par ailleurs été constaté que l'estimation de la durée séparant l'instant de la détection du panneau de signalisation et un instant futur auquel le véhicule automobile croisera le panneau de signalisation détecté permet de maîtriser de façon fine et intelligente la quantité de lumière devant être émise vers ce panneau, afin d'optimiser la détection et la compréhension de ce panneau par le conducteur ou par une caméra du véhicule automobile.

On entend par zone d'intensité moindre une zone éclairée par l'ensemble des faisceaux lumineux élémentaires émis par les sources lumineuses élémentaires de ladite partie, chaque faisceau lumineux élémentaire émis par une source lumineuse élémentaire dans cette zone présentant une intensité lumineuse inférieure à l'intensité lumineuse nominale susceptible d'être émise par cette source lumineuse élémentaire. Par exemple, l'intensité lumineuse de ce faisceau lumineux élémentaire peut être sensiblement inférieure à l'intensité lumineuse de chacun des faisceaux lumineux élémentaires formant le reste du faisceau lumineux pixélisé.

Avantageusement, l'étape de détection du panneau de signalisation peut être réalisée par une caméra embarquée dans le véhicule automobile.

Dans un mode de réalisation de l'invention, lors de l'étape de détection, le système de capteur estime une distance séparant le véhicule automobile du panneau de signalisation, et, lors de l'étape d'estimation de la durée de croisement, la durée de croisement est estimée en fonction de ladite distance et de la vitesse du véhicule automobile hôte. Si on le souhaite, le système de capteur estime une distance séparant le système de capteur du panneau de signalisation et un angle entre le système de capteur et le panneau de signalisation, et, lors de l'étape d'estimation de la durée de croisement, la durée de croisement est estimée en fonction de ladite distance, dudit angle et de la vitesse du véhicule automobile.

Dans un autre mode de réalisation de l'invention, lors de l'étape de détection, le système de capteur détermine un éclairement du panneau de signalisation par le système d'éclairage. Le cas échéant, lors de l'étape d'estimation de la durée de croisement, une distance séparant le véhicule automobile du panneau de signalisation est estimée en fonction de l'éclairement déterminé et de l'intensité lumineuse émise par le système d'éclairage en direction du panneau, et, lors de l'étape d'estimation de la durée de croisement, la durée de croisement est estimée en fonction de ladite distance et de la vitesse du véhicule automobile hôte. On peut ainsi déployer le procédé selon l'invention sur des véhicules équipés de systèmes de capteur peu performant. Par exemple, dans le cas où le système de capteur comporte une caméra apte à acquérir une image de la route, l'éclairement du panneau de signalisation peut être déterminé à l'aide de l'intensité de chacun des pixels de cette image situés au niveau du panneau de signalisation ou à partir de la luminance du panneau de signalisation que pourrait estimer cette caméra. L'intensité lumineuse émise par le système d'éclairage en direction étant connue d'avance puisqu'il s'agit de la consigne des sources lumineuses élémentaires, on peut par exemple calculer la distance séparant le véhicule automobile du panneau de signalisation au moyen de la loi de Bouguer, formulée selon l'équation suivante.

[Math 1]

$$E = \frac{I.\cos(\theta)}{d^2}$$

Où E est l'éclairement du panneau de signalisation par le système d'éclairage, I est l'intensité lumineuse émise par le système d'éclairage en direction du panneau de signalisation, d est la distance séparant le véhicule automobile du panneau de signalisation et θ est l'angle entre la normale à la surface du panneau de signalisation et la direction d'émission du système d'éclairage, pouvant être considéré comme nul.

Avantageusement, le procédé peut comporter une étape d'estimation d'un niveau d'éblouissement d'un conducteur du véhicule automobile par le panneau de signalisation et de comparaison de ce niveau d'éblouissement à un seuil d'éblouissement donné, l'étape de contrôle de sources lumineuses élémentaires pour générer dans le faisceau lumineux ladite zone d'intensité moindre étant conditionné au fait que le niveau d'éblouissement soit supérieur au seuil d'éblouissement donné. Selon cette caractéristique, il est ainsi possible de ne pas activer la fonction d'anti-éblouissement du panneau de signalisation, lorsque ce panneau de signalisation n'est pas considéré comme éblouissant. Dans ce cas, le panneau de signalisation est donc éclairé par le faisceau lumineux pixélisé avec une intensité nominale.

Il est par exemple possible de déterminer la luminance du panneau de signalisation, et d'estimer ensuite le niveau d'éblouissement à partir du logarithme de cette luminance. Ce niveau d'éblouissement est notamment défini selon l'échelle de De Boer, qui décrit l'intensité d'une gêne ressentie, au moyen des valeurs suivantes : 1 (à peine perceptible), 3 (juste tolérable), 5 (perturbant), 7 (satisfaisant), 9 (insupportable). Ledit seuil d'éblouissement peut par exemple être fixé à 3.

Dans un exemple alternatif ou cumulatif, le système de capteur peut estimer la luminance du panneau de signalisation et les dimensions du panneau de signalisation, l'étape de contrôle de sources lumineuses élémentaires pour générer dans le faisceau lumineux ladite zone d'intensité moindre étant conditionné au fait que la luminance du panneau de signalisation soit supérieure à un seuil donné et au fait que les dimensions du panneau de signalisation soient supérieures à un seuil donné.

Avantageusement, le procédé comporte une étape de comparaison de la durée de croisement, notamment estimée à l'issue de l'étape de détection du panneau de signalisation, à un seuil minimum. Si la durée de croisement est inférieure audit seuil minimum, lors de l'étape de contrôle des sources lumineuses élémentaires, chaque source lumineuse élémentaire de ladite partie destinée à générer la zone d'intensité moindre est contrôlée pour émettre un faisceau lumineux élémentaire d'intensité constante au fur et à mesure du déplacement du véhicule automobile vers le panneau de signalisation. Selon cette caractéristique, lorsque le véhicule automobile est trop proche du panneau de signalisation, on diminue l'intensité lumineuse émise vers le panneau de signalisation vers une valeur constante, non susceptible de générer une rétroréflexion éblouissante mais juste suffisante pour permettre une perception et une compréhension du panneau de signalisation par le conducteur ou une caméra du véhicule automobile. Par exemple, ladite intensité constante peut être comprise entre 20% et 30%, et notamment égale à 26%, de l'intensité lumineuse nominale susceptible d'être émise par cette source lumineuse élémentaire.

Avantageusement, le procédé comporte une étape de comparaison de la durée de croisement, notamment estimée à l'issue de l'étape de détection du panneau de signalisation, à un seuil minimum. Si la durée de croisement est supérieure audit seuil minimum, lors de l'étape de contrôle des sources lumineuses élémentaires, chaque source lumineuse élémentaire de ladite partie destinée à générer la zone d'intensité moindre est contrôlée pour émettre un faisceau lumineux élémentaire dont l'intensité diminue au fur et à mesure du déplacement du véhicule automobile vers le panneau de signalisation. Grâce à cette caractéristique, on s'assure que la luminance du panneau de signalisation, causé par l'éclairement du panneau de signalisation par le système d'éclairage, soit décroissante au fur et à mesure que l'intervalle de temps entre l'instant futur auquel le véhicule automobile croisera le panneau de signalisation et l'instant présent diminue. De la sorte, on s'assure que l'éclairement du panneau de signalisation soit insuffisant pour éblouir le conducteur par rétroréflexion mais suffisant pour que le conducteur ou une caméra puisse percevoir et comprendre le panneau de signalisation pendant tout le déplacement du véhicule automobile. Avantageusement toujours, lorsque la durée de croisement devient inférieure à un seuil minimum donné, lors de l'étape de contrôle des sources lumineuses élémentaires, chaque source lumineuse élémentaire de ladite partie destinée à générer la zone d'intensité moindre est contrôlée pour émettre un faisceau lumineux élémentaire d'intensité constante au fur et à mesure du déplacement du véhicule automobile vers le panneau de signalisation.

De préférence, le procédé comporte une étape de sélection d'une loi de contrôle parmi une pluralité de lois de contrôle en fonction de la valeur de la durée de croisement, chaque loi de contrôle définissant l'évolution d'une intensité lumineuse à émettre selon une fonction croissante du temps. Le cas échéant, chaque source lumineuse élémentaire de ladite partie destinée à générer la zone d'intensité moindre est contrôlée pour émettre un faisceau lumineux élémentaire dont l'intensité est déterminée au moyen de la loi de contrôle sélectionnée, en fonction de la valeur du temps restant avant que le véhicule automobile croise le panneau de signalisation. En d'autres termes, on estime de façon périodique au cours du déplacement du véhicule automobile, à compter de la détection du panneau de signalisation, le temps restant avant que le véhicule automobile croise le panneau de signalisation , et l'intensité des sources lumineuses est redéfinie pour chaque valeur de ce temps restant. On définit ainsi une pluralité de profils d'éclairement du panneau de signalisation par le système d'éclairage, de sorte à optimiser la perception et la compréhension du panneau de signalisation par le conducteur ou une caméra au fur et à mesure du déplacement du véhicule automobile.

Si on le souhaite, chaque loi de contrôle de la pluralité de lois de contrôle est associée à au moins une durée de croisement distincte, et notamment à une plage de durées de croisement distincte. Le cas échéant, la fonction croissante de chaque loi de contrôle présente une vitesse de croissance; et, pour une première loi de contrôle associée à une durée de croisement supérieure à la durée de croisement associée à une deuxième loi de contrôle, la vitesse de croissance de la fonction croissante de la première loi de contrôle est inférieure à celle de la deuxième loi de contrôle.

Par exemple, la fonction croissante de chaque loi de contrôle peut être une fonction puissance du temps, et dont l'exposant est associé à la durée de croisement associée à cette loi de contrôle. Cette fonction puissance peut par exemple être définie par l'équation suivante :

[Math 2]

$$I = \alpha_i.ttc^{\beta_i}$$

Où I est l'intensité lumineuse émise par chaque source lumineuse élémentaire de ladite partie du système d'éclairage, ttc est une variable représentant le temps restant avant que le véhicule automobile croise le panneau de signalisation et dont la valeur est comprise entre 0 et la durée de croisement, $\alpha_i$ est une amplitude de la fonction puissance associée à une loi de contrôle i, et $\beta_i$ est un exposant de la fonction puissance associé à une loi de contrôle i.

On comprend ainsi que plus la durée de croisement estimée lors de la détection du panneau de signalisation est importante, plus l'exposant $\beta_i$ de la fonction puissance de la loi de contrôle qui sera sélectionnée sera faible et/ou plus l'amplitude $\alpha_i$ de la fonction puissance de la loi de contrôle qui sera sélectionnée sera importante. De la sorte, on garantit ainsi une décroissance plus ou moins rapide, en fonction de cette durée de croisement initiale, de la luminance du panneau de signalisation vers la valeur constante. Avantageusement, pour chaque loi de contrôle de ladite pluralité de lois de contrôle, l'exposant $\beta_i$ de la fonction puissance associé à cette loi de contrôle est inférieur à 2.

Avantageusement, lors de l'étape de contrôle des sources lumineuses élémentaires, les sources lumineuses élémentaires peuvent être contrôlées pour l'émission d'un faisceau lumineux pixélisé de type route non éblouissant.

De préférence, lors de l'étape de contrôle des sources lumineuses élémentaires, ladite partie des sources lumineuses élémentaires peut être contrôlée, en fonction de ladite durée de croisement, pour générer dans le faisceau lumineux une zone dont les bords encadrent le panneau de signalisation.

Par exemple, le système de capteur peut être agencé pour estimer, lors de l'étape de détection du panneau de signalisation, une paire d'angles horizontaux entre le système de capteur et des extrémités latérales du panneau de signalisation et/ou une paire d'angles verticaux entre le système de capteur et des extrémités supérieure et inférieure du panneau de signalisation. Le cas échéant, le procédé peut comporter une étape de détermination d'une paire d'angles horizontaux et/ou verticaux entre le système d'éclairage et lesdites extrémités latérales et/ou supérieure et inférieure, par exemple par une opération de changement de repère. Les sources lumineuses élémentaires de ladite partie devant être contrôlée pour générer ladite zone de moindre intensité sont alors les sources lumineuses élémentaires susceptibles d'émettre un faisceau lumineux élémentaire dont le cône d'émission est horizontalement et/ou verticalement au moins partiellement compris dans l'intervalle défini par les paires d'angles horizontaux et/ou verticaux déterminés précédemment. Avantageusement, ces étapes de détermination de paires d'angles et de contrôle des sources lumineuses élémentaires sont renouvelées périodiquement durant le déplacement du véhicule automobile, de sorte que les bords de la zone encadrent le panneau de signalisation pendant ce déplacement.

Avantageusement, ladite partie des sources lumineuses élémentaires est contrôlée pour générer dans le faisceau lumineux une zone d'intensité moindre pendant toute la durée de déplacement du véhicule automobile entre l'instant de la détection du panneau de signalisation et l'instant futur auquel le véhicule automobile croisera le panneau de signalisation détecté. Le cas échéant, après que le véhicule automobile ait croisé le panneau de signalisation, ladite partie des sources lumineuses élémentaires peut être contrôlée pour générer chacune un faisceau lumineux élémentaire d'intensité nominale.

L'invention a également pour objet un véhicule automobile comprenant un système de capteur, un système d'éclairage et un contrôleur, le contrôleur, le système de capteur et le système d'éclairage étant agencés pour mettre en œuvre le procédé selon l'invention.

Avantageusement, le système d'éclairage comprend une pluralité de sources lumineuses élémentaires contrôlables sélectivement, chaque source lumineuse élémentaire étant apte à émettre un faisceau lumineux élémentaire, notamment dont l'ouverture angulaire verticale est inférieure à 1°. Le cas échéant, l'ensemble des sources lumineuses élémentaires peut être apte à émettre un faisceau lumineux pixélisé s'étendant horizontalement dans une plage de -16° à +16° et verticalement dans une plage de -1° à +6° autour de l'horizon.

Dans un mode de réalisation de l'invention, le système d'éclairage comporte un module lumineux comportant une source lumineuse pixélisée comportant une pluralité d'émetteurs élémentaires agencés en matrice, chacun des émetteurs élémentaires formant une source lumineuse élémentaire et étant activable sélectivement pour émettre un faisceau lumineux élémentaire ; et un élément optique de projection associé à ladite source lumineuse pixélisée pour projeter chacun desdits faisceaux lumineux élémentaires sur la route. Par exemple, la source lumineuse pixélisée comprend au moins une matrice d'éléments électroluminescents (appelée en anglais monolithic array), et notamment au moins une matrice de matrice d'éléments électroluminescents monolithique, aussi appelée matrice monolithique.

En variante, le module lumineux peut comporter une source de lumière formée par exemple d'au moins une diode électroluminescente émettant de la lumière et une matrice d'éléments optoélectroniques, et par exemple une matrice de micro-miroirs (également connue sous l'acronyme DMD, pour l'anglais Digital Micromirror Device) qui dirige les rayons lumineux issus de ladite au moins une source de lumière par réflexion vers un élément optique de projection.

La présente invention est maintenant décrite à l'aide d'exemples uniquement illustratifs et nullement limitatifs de la portée de l'invention, et à partir des dessins annexés, dessins sur lesquels les différentes figures représentent :

[Fig. 1] représente, schématiquement et partiellement, un véhicule automobile selon un mode de réalisation de l'invention ;

[Fig. 2] représente un procédé selon un mode de réalisation de l'invention, mis en œuvre par le véhicule automobile de la [Fig. 1] ;

[Fig. 3] représente une vue de côté d'une scène de route lors de la mise en œuvre du procédé de la [Fig. 2] par le véhicule de la [Fig. 1] ;

[Fig. 4] représente une vue de face d'une scène de route lors de la mise en œuvre du procédé de la [Fig. 2] par le véhicule de la [Fig. 1] ;

[Fig. 5] représente des exemples de loi de contrôle employés dans le procédé de la [Fig. 2] ; et

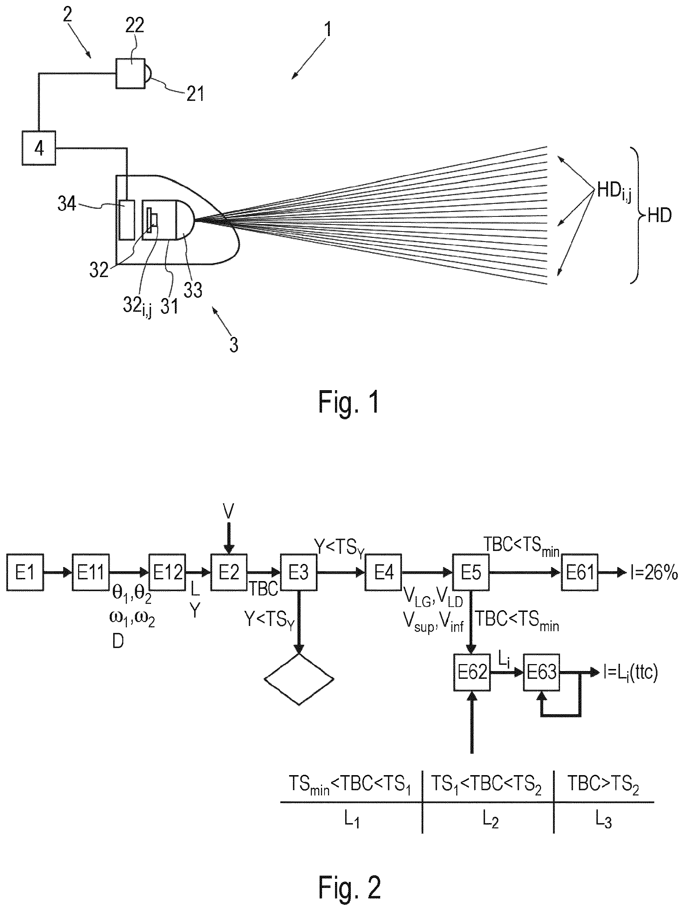

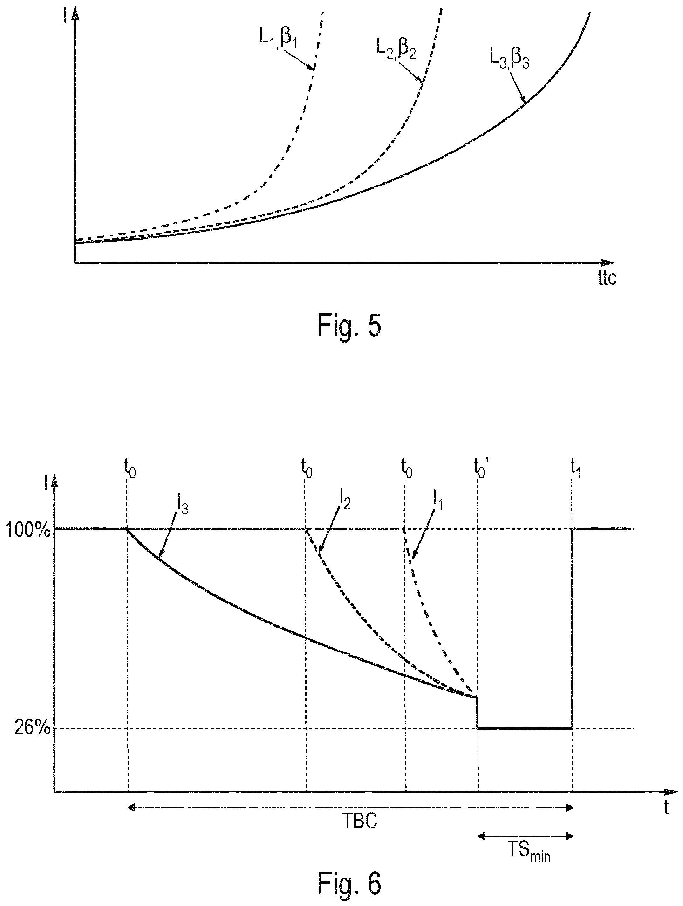

[Fig. 5] représente des exemples de mise en œuvre du procédé de la [Fig. 2] .

Dans la description qui suit, les éléments identiques, par structure ou par fonction, apparaissant sur différentes figures conservent, sauf précision contraire, les mêmes références.

On a représenté en [Fig. 1] une vue partielle d'un véhicule automobile 1 selon un mode de réalisation de l'invention. Le véhicule automobile 1 comporte un système de capteur 2 comprenant une caméra 21 agencée pour acquérir des images de la route en aval du véhicule automobile. Le système de capteur 2 comporte en outre un calculateur 22 agencé pour mettre en œuvre différents procédés de traitement des images acquise par la caméra 21.

Le véhicule automobile 1 comporte par ailleurs un système d'éclairage 3 comprenant un module lumineux 31. Le module lumineux 31 comporte notamment une source de lumière pixélisée 32 associée à une lentille 33. Dans l'exemple décrit, la source lumineuse pixélisée 32 est une diode électroluminescente pixélisée monolithique dont chacun des éléments émetteurs de lumière forme une source lumineuse élémentaire $32_{i,j}$ pouvant être activée et contrôlée sélectivement par un contrôleur intégré pour émettre de la lumière vers la lentille 33, qui projette ainsi sur la route un faisceau lumineux élémentaire $HD_{i,j}$ dont l'intensité lumineuse est contrôlable. Chaque faisceau lumineux élémentaire $HD_{i,j}$ est projeté par la lentille dans un cône d'émission donné, défini par une direction d'émission donnée et une ouverture angulaire donnée. Ainsi, dans l'exemple décrit, l'ensemble des faisceaux lumineux élémentaires $HD_{i,j}$ forme ainsi un faisceau lumineux pixélisé HD présentant 500 pixels répartis sur 25 colonnes et 20 lignes, s'étendant horizontalement sur une plage verticalement sur une plage horizontale angulaire de -16° à +16° et sur une plage verticale angulaire de -1° à +6° et dont chaque pixel est formé par l'un de ces faisceaux lumineux élémentaires $HD_{i,j}$. Chaque faisceau lumineux élémentaire $HD_{i,j}$ émis par l'une des sources lumineuses élémentaires $32_{i,j}$ de la source 32 présente une ouverture horizontale et verticale inférieure à 1°.

Le module lumineux 31 comporte un contrôleur 34 agencé pour contrôler le contrôleur intégré de la source lumineuse pixélisé 32 de sorte à contrôler sélectivement l'allumage, l'extinction et la modification de l'intensité lumineuse de chacun des faisceaux lumineux élémentaires $HD_{i,j}$, en fonction d'instructions reçues d'un calculateur 4 du véhicule hôte 1, ces instructions étant notamment déterminées à partir des informations fournies par le calculateur 22 du système de capteur 2.

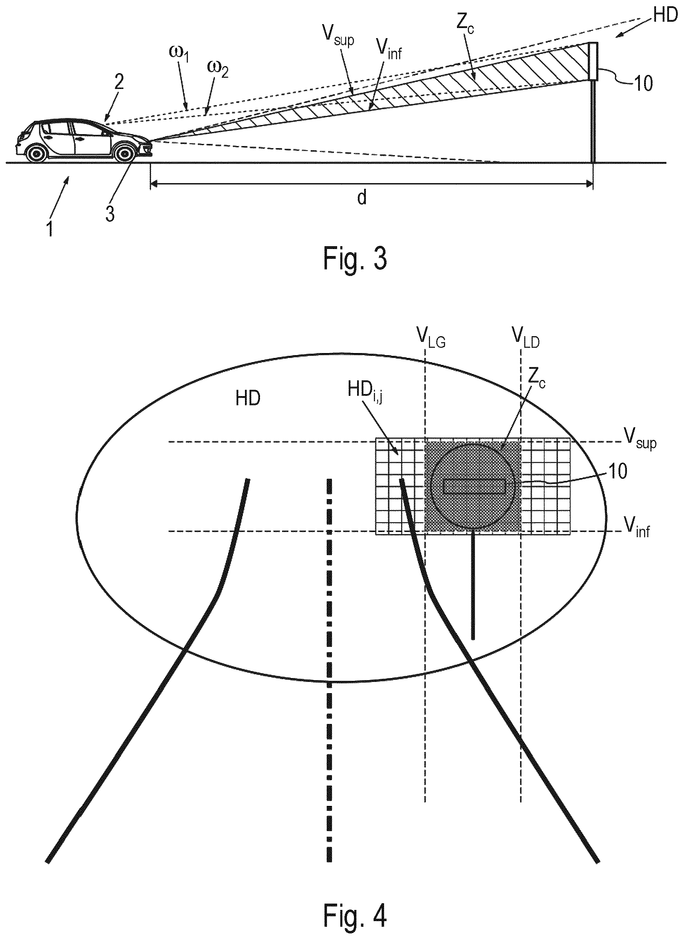

On a représenté en [Fig. 2] un procédé de commande du système d'éclairage 3 selon un mode de réalisation de l'invention. Ce procédé va être décrit, en lien avec les [Fig. 3] et [Fig. 4] qui décrivent respectivement une vue de côté et une vue de face d'une scène de route lors de la mise en œuvre du procédé de la [Fig. 2].

Dans une étape E1, le système de capteur 2 détecte un panneau de signalisation 10 sur la route. Un panneau de signalisation 10 présente une forme généralement circulaire, triangulaire ou rectangulaire, est généralement pourvu d'un revêtement réfléchissant et comporte des inscriptions et/ou des pictogrammes. Il est ainsi possible de détecter la présence d'un tel panneau sur une image acquise par la caméra 21, notamment du fait que la lumière ambiante et la lumière émise par les différents usagers de la route y soit réfléchie vers la caméra 21. Le calculateur 22 est ainsi doté de moyens de traitement de l'image permettant cette détection.

A la suite de la détection , le calculateur 22 détermine, dans une étape E11, différentes caractéristiques du panneau de signalisation 10 et notamment :

    a. des angles horizontaux $\theta_1$ et $\theta_2$ entre la caméra 21 et les extrémités latérales du panneau de signalisation 10 ;
    b. des angles verticaux $\omega_1$ et $\omega_2$ entre la caméra 21 et des extrémités supérieure et inférieure du panneau de signalisation 10 ;
    c. une distance d séparant la caméra 21 du panneau de signalisation 10 ;

Dans une étape E12, le calculateur 22 détermine la luminance L du panneau de signalisation 10, générée par la rétroréflexion de la lumière émise par le système d'éclairage 3.

Cette luminance L permet enfin au calculateur d'estimer, dans cette même étape, un niveau d'éblouissement Y à partir du logarithme de cette luminance L, ramené sur une plage de 1 à 10, correspondant à l'échelle de De Boer.

L'ensemble des paramètres est fourni au calculateur 4 qui estime, dans une étape E2, à partir de la distance d déterminée à l'instant t0 de la détection du panneau de signalisation 10 par le système de capteur 2, une durée dite de croisement TBC séparant cet instant $t_0$ d'un instant futur $t_1$ auquel le véhicule automobile 1 croisera ce panneau de signalisation 10. Cette durée TBC peut notamment être calculée au moyen de la distance d et de la vitesse v du véhicule automobile 1 à l'instant $t_0$, cette vitesse v étant connue du calculateur 4.

Dans une étape E3, le niveau d'éblouissement Y est comparé à un seuil d'éblouissement donné $TS_Y$ sur l'échelle de De Boer, par exemple de valeur 3.

Dans le cas où le niveau d'éblouissement Y est effectivement supérieur à ce seuil d'éblouissement $TS_Y$, le calculateur 4 détermine dans une étape E4, à partir, des angles horizontaux $\theta_1$ et $\theta_2$ et des angles verticaux $\omega_1$ et $\omega_2$, des angles horizontaux $V_{LG}$ et $V_{LD}$ et verticaux $V_{sup}$ et $V_{inf}$ entre le système d'éclairage 3 et les extrémités latérales, supérieure et inférieure, par une opération de changement de repère. Le calculateur 4 sélectionne ainsi les sources lumineuses élémentaires $32_{i,j}$ susceptibles d'émettre un faisceau lumineux élémentaire $HD_{i,j}$ dont le cône d'émission est horizontalement et/ou verticalement au moins partiellement compris dans l'intervalle défini par les paires d'angles $V_{LG}$ et $V_{LD}$ et $V_{sup}$ et $V_{inf}$ déterminés précédemment.

Dans une étape E5, la durée de croisement TBC est comparée à un seuil minimum $TS_{min}$.

Si la durée de croisement TBC est inférieure au seuil minimum $TS_{min}$, le calculateur 4 envoie, dans une étape E61, une consigne de contrôle au contrôleur 34 pour que chacune des sources lumineuses élémentaires sélectionnées $32_{i,j}$ émette un faisceau lumineux élémentaire $HD_{i,j}$ d'intensité I constante, inférieure à l'intensité lumineuse nominale susceptible d'être émise par cette source, pendant toute la durée TBC. Cette intensité constante est par exemple égale à 26% de l'intensité lumineuse nominale.

On comprend ainsi que les sources lumineuses sélectionnées $32_{i,j}$ génèrent ensemble une zone d'intensité moindre $Z_C$, vis-à-vis du reste du faisceau lumineux pixélisé HD, dont les bords encadrent le panneau de signalisation 10.

Cette zone $Z_C$ est maintenue activée et centrée sur le panneau de signalisation 10 pendant tout le déplacement du véhicule automobile 1 entre l'instant $t_0$ et l'instant $t_1$ (la détection et l'estimation des angles horizontaux et verticaux $\theta_1$, $\theta_2$, $\omega_1$ et $\omega_2$ étant renouvelées de façon périodique pendant ce déplacement).

Si la durée de croisement TBC est inférieure au seuil minimum $TS_{min}$, le calculateur 4 compare, dans une étape E62, la durée de croisement TBC à une pluralité de plages de durée de croisement. Dans l'exemple décrit, la durée de croisement TBC est comparée à un premier seuil $TS_1$ et à un deuxième seuil $TS_2$ supérieur à $TS_1$, lesquels définissent ainsi trois plages, à savoir $TS_{min}$-$TS_1$, $TS_1$-$TS_2$ et les durées supérieures à $TS_2$.

A chaque plage est associée une loi de contrôle $L_1$, $L_2$, $L_3$, qui définit pour cette plage l'évolution d'une intensité lumineuse I selon une fonction croissante du temps restant avant que le véhicule 1 croise le panneau de signalisation 10.

Dans l'exemple décrit, chaque fonction est une fonction puissance du temps restant ttc, dont l'exposant est prédéterminé en fonction de la plage associée. Le temps restant ttc est ainsi une variable temporelle dont la valeur est décroissante depuis la durée de croisement TBC jusqu'à atteindre 0.

Plus précisément, l'exposant $\beta_i$ d'une loi $L_i$ associée à une plage $TS_i$-$TS_j$ est supérieur à l'exposant $\beta_j$ de la loi $L_j$ associée à une plage plus grande $TS_j$-$TS_k$. En d'autres termes, l'exposant $\beta_1$ de la loi $L_1$ associé à la plage $TS_{min}$-$TS_1$ est supérieur à l'exposant $\beta_2$ de la loi $L_2$ associé à la plage $TS_1$-$TS_2$, lui-même supérieur à l'exposant $\beta_3$ de la loi $L_3$ associé à la plage des durées supérieures à $TS_2$.

On a représenté en [Fig. 5] sur un même graphe ces différentes fonctions des lois $L_1$ à $L_3$. On constate ainsi que la vitesse de croissance de $L_1$ est ainsi supérieure à la vitesse de croissance de $L_2$, elle-même supérieure à la vitesse de croissance de $L_3$.

Dans l'étape E62, le calculateur 4 sélectionne ainsi la loi $L_i$ associée à la plage dans laquelle se trouve la valeur TBC estimée lors de la détection du panneau de signalisation 10. Puis de façon périodique, dans une étape E63, le calculateur 4 estime le temps restant ttc et envoie une consigne de contrôle au contrôleur 34 pour que chacune des sources lumineuses élémentaires sélectionnées $32_{i,j}$ émette un faisceau lumineux élémentaire $HD_{i,j}$ dont l'intensité I est déterminée à l'aide de la loi sélectionnée $L_i$, en fonction du temps restant ttc estimé. Il est à relever que si le temps restant ttc, estimé à un instant donné, devient inférieur au seuil $TS_{min}$, la consigne émise par le calculateur 4 est la valeur constante de 26% pour tout le reste du déplacement, comme pour l'étape E61.

On a représenté en [Fig. 6], sur un même graphe, trois scénarios de mise en œuvre du procédé selon l'invention, pour trois valeurs différentes de la durée de croisement TBC estimée lors de la détection du panneau de signalisation à un instant $t_0$, chacune de ces valeurs se trouvant dans une plage différente. Chaque courbe $I_1$, $I_2$, et $I_3$ représente l'intensité lumineuse, en % de l'intensité nominale, émise par les sources lumineuses élémentaires sélectionnées $32_{i,j}$ dans la zone $Z_C$, au cours du déplacement du véhicule automobile 1, l'abscisse représentant le temps. Plus précisément, la courbe $I_1$ est obtenue au moyen de la loi $L_1$, la courbe $I_2$ est obtenue au moyen de la loi $L_2$ et la courbe $I_3$ est obtenue au moyen de la loi $L_3$.

On constate ainsi que ces intensités décroissent à partir de l'instant $t_0$ auquel le panneau de signalisation 10 est détecté, jusqu'à un instant $t_0$' auquel le temps restant ttc devient inférieur au seuil $TS_{min}$, les intensités lumineuses prenant alors une valeur constante de 26%. Une fois le temps $t_1$ atteint, la valeur ttc ayant donc atteint 0 et le panneau lumineux 10 étant dépassé, les intensités lumineuses peuvent alors reprendre une valeur nominale de 100%.

On constate également que, du fait de l'utilisation des lois $L_1$, $L_2$ et $L_3$, plus le panneau de signalisation 10 est détecté tôt, plus la décroissance de l'intensité lumineuse émise dans la zone $Z_C$ est faible. On s'assure ainsi un éclairement optimal du panneau de signalisation 10 lors du déplacement du véhicule automobile 1, qui permette au conducteur ou à la caméra 21 de continuer de percevoir et de comprendre le panneau de signalisation tout le long de ce déplacement, sans pour autant générer une rétroréflexion qui serait éblouissante.

Il est à noter que le reste des sources lumineuses élémentaires $32_{i,j}$ peuvent mettre en œuvre une fonction d'éclairage de la route non éblouissant, notamment en atténuant ou en désactivant les sources lumineuses élémentaires $32_{i,j}$ susceptibles d'éblouir le conducteur d'un véhicule automobile cible croisé ou suivi.

La description qui précède explique clairement comment l'invention permet d'atteindre les objectifs qu'elle s'est fixée, et notamment en proposant un procédé de contrôle d'un système d'éclairage d'un véhicule qui permette d'optimiser la détection et la compréhension d'un panneau de signalisation par le conducteur ou une caméra du véhicule tout le long du déplacement du véhicule sans toutefois risquer de générer une rétroréflexion éblouissante par ce panneau.

En tout état de cause, l'invention ne saurait se limiter aux modes de réalisation spécifiquement décrits dans ce document, et s'étend en particulier à tous moyens équivalents et à toute combinaison techniquement opérante de ces moyens. En particulier, on pourra envisager d'autres types de module lumineux que celui décrit, et en particulier un module lumineux comportant une association d'une source lumineuse et d'une matrice de micro-miroirs activables sélectivement. On pourra également envisager d'estimer la distance séparant le véhicule automobile du panneau de signalisation, par exemple à partir de l'éclairement du panneau de signalisation mesuré par le système de capteur et à l'aide de la loi de Bouguer. On pourra également envisager un nombre de lois de contrôle différent de celui qui a été décrit et/ou des profils des fonctions de ces lois de contrôle différent de ce qui ont été décrits.

**Revendications**

1. Procédé de contrôle d'un système d'éclairage (3) d'un véhicule automobile (1), le système d'éclairage comprenant une pluralité de sources lumineuses élémentaires ($32_{i,j}$) chacune contrôlable sélectivement pour émettre un faisceau lumineux élémentaire ($HD_{i,j}$), les faisceaux lumineux élémentaires formant ensemble un faisceau lumineux pixélisé (HD), le procédé comportant les étapes suivantes :

   a. (E1) Détection d'un panneau de signalisation (10) par un système de capteur (2) du véhicule automobile ; le procédé étant **caractérisé par** les étapes suivantes:
   b. (E2) Estimation d'une durée de croisement (TBC) entre l'instant ($t_0$) de la détection du panneau de signalisation et un instant futur ($t_1$) auquel le véhicule automobile croisera le panneau de signalisation détecté ;
   c. (E61, E63) Contrôle des sources lumineuses élémentaires du système d'éclairage du véhicule hôte pour émettre un faisceau lumineux pixélisé, une partie des sources lumineuses élémentaires étant contrôlée, en fonction de ladite durée de croisement, pour générer dans le faisceau lumineux une zone d'intensité moindre ($Z_C$) s'étendant au niveau du panneau de signalisation.

2. Procédé de contrôle selon la revendication précédente, dans lequel, lors de l'étape de détection (E1), (E11) le système de capteur (2) estime une distance (d) séparant le véhicule automobile (1) du panneau de signalisation (10), et dans lequel, lors de l'étape d'estimation (E2) de la durée de croisement, la durée de croisement (TBC) est estimée en fonction de ladite distance et de la vitesse (v) du véhicule automobile.

3. Procédé de contrôle selon la revendication 1, dans lequel, lors de l'étape de détection (E1), (E11) le système de capteur détermine un éclairement (E) du panneau de signalisation (10) par le système d'éclairage (2), dans lequel, lors de l'étape d'estimation (E2) de la durée de croisement (TBC), une distance (d) séparant le véhicule automobile (1) du panneau de signalisation est estimée en fonction de l'éclairement déterminé et de l'intensité lumineuse (I) émise par le système d'éclairage en direction du panneau, et dans lequel, lors de l'étape d'estimation de la durée de croisement, la durée de croisement est estimée en fonction de ladite distance et de la vitesse (v) du véhicule automobile.

4. Procédé selon l'une des revendications précédentes, **caractérisé en ce qu'**il comporte une étape d'estimation (E12) d'un niveau d'éblouissement (Y) d'un conducteur du véhicule automobile (1) par le panneau de signalisation et de comparaison de ce niveau d'éblouissement à un seuil d'éblouissement donné (TSy), l'étape de contrôle (E61, E63) de sources lumineuses élémentaires ($32_{i,j}$) pour générer dans le faisceau lumineux (HD) ladite zone d'intensité moindre ($Z_C$) étant conditionné au fait que le niveau d'éblouissement soit supérieur au seuil d'éblouissement donné.

5. Procédé selon l'une des revendications précédentes, **caractérisé en ce qu'**il comporte une étape de comparaison (E5) de la durée de croisement (TBC) à un seuil minimum ($TS_{min}$), dans lequel, si la durée de croisement est inférieure audit seuil minimum, lors de l'étape de contrôle (E61) des sources lumineuses élémentaires ($32_{i,j}$), chaque source lumineuse élémentaire de ladite partie destinée à générer la zone d'intensité moindre ($Z_C$) est contrôlée pour émettre un faisceau lumineux élémentaire ($HD_{i,j}$) d'intensité (I) constante au fur et à mesure du déplacement du véhicule automobile (1) vers le panneau de signalisation (10).

6. Procédé selon l'une des revendications précédentes, **caractérisé en ce qu'**il comporte une étape de comparaison (E5) de la durée de croisement (TBC) à un seuil minimum ($TS_{min}$), dans lequel, si la durée de croisement est supérieure audit seuil minimum, lors de l'étape de contrôle (E63) des sources lumineuses élémentaires ($32_{i,j}$), chaque source lumineuse élémentaire de ladite partie destinée à générer la zone d'intensité moindre ($Z_C$) est contrôlée pour émettre un faisceau lumineux élémentaire ($HD_{i,j}$) dont l'intensité I) diminue au fur et à mesure du déplacement du véhicule automobile (1) vers le panneau de signalisation (10).

7. Procédé selon la revendication précédente, le procédé comportant une étape de sélection (E62) d'une loi de contrôle ($L_i$) parmi une pluralité de lois de contrôle ($L_1$, $L_2$, $L_3$) en fonction de la valeur de la durée de croisement (TBC), chaque loi de contrôle définissant l'évolution d'une intensité lumineuse (I) à émettre selon une fonction croissante du temps , et dans lequel chaque source lumineuse élémentaire ($32_{i,j}$) de ladite partie destinée à générer la zone d'intensité moindre ($Z_C$) est contrôlée pour émettre un faisceau lumineux élémentaire ($HD_{i,j}$) dont l'intensité est déterminée au moyen de la loi de contrôle sélectionnée, en fonction de la valeur du temps restant avant que le véhicule automobile croise le panneau de signalisation (ttc).

8. Procédé selon la revendication précédente, dans lequel chaque loi de contrôle ($L_i$) de la pluralité de lois de contrôle

($L_1$, $L_2$, $L_3$) est associée à au moins une durée de croisement ($TS_{min}$, $TS_1$, $TS_2$), distincte, dans lequel la fonction croissante de chaque loi de contrôle présente une vitesse de croissance; et en ce que, pour une première loi de contrôle associée à une durée de croisement supérieure à la durée de croisement associée à une deuxième loi de contrôle, la vitesse de croissance de la fonction croissante de la première loi de contrôle est inférieure à celle de la deuxième loi de contrôle.

9. Procédé selon la revendication précédente, dans lequel la fonction croissante de chaque loi de contrôle ($L_1$, $L_2$, $L_3$) est une fonction puissance du temps (ttc) et dont l'exposant ($\beta_1$, $\beta_2$, $\beta_3$) est associé à la durée de croisement ($TS_{min}$, $TS_1$, $TS_2$) associée à cette loi de contrôle.

10. Véhicule automobile (1) comprenant un système de capteur (2), un système d'éclairage (3) et un contrôleur (4), le contrôleur étant agencé pour mettre en œuvre le procédé selon l'une des revendications précédentes.

**Patentansprüche**

1. Verfahren zum Steuern eines Beleuchtungssystems (3) eines Kraftfahrzeugs (1), wobei das Beleuchtungssystem eine Mehrzahl von elementaren Lichtquellen ($32_{i,j}$) umfasst, von denen jede selektiv steuerbar ist, um einen elementaren Lichtstrahl ($HD_{i,j}$) zu emittieren, wobei die elementaren Lichtstrahlen gemeinsam einen gepixelten Lichtstrahl (HD) bilden, wobei das Verfahren die folgenden Schritte umfasst:

   a. (E1) Detektieren eines Verkehrsschilds (10) durch ein Sensorsystem (2) des Kraftfahrzeugs; wobei das Verfahren durch die folgenden Schritte gekennzeichnet ist:
   b. (E2) Schätzen einer Passierdauer (TBC) zwischen dem Zeitpunkt ($t_0$) des Detektierens des Verkehrsschilds und einem zukünftigen Zeitpunkt ($t_1$), zu dem das Kraftfahrzeug das detektierte Verkehrsschild passieren wird;
   c. (E61, E63) Steuern der elementaren Lichtquellen des Beleuchtungssystems des Host-Fahrzeugs, um einen gepixelten Lichtstrahl zu emittieren, wobei ein Teil der elementaren Lichtquellen in Abhängigkeit von der Passierdauer gesteuert wird, um in dem Lichtstrahl eine Zone von geringerer Intensität ($Z_c$) zu erzeugen, die sich im Bereichdes Verkehrsschilds erstreckt.

2. Verfahren zum Steuern nach dem vorhergehenden Anspruch, wobei bei dem Schritt des Detektierens (E1), (E11) das Sensorsystem (2) eine Entfernung (d) schätzt, die das Kraftfahrzeug (1) von dem Verkehrsschild (10) trennt, und wobei bei dem Schritt des Schätzens (E2) der Passierdauer die Passierdauer (TBC) in Abhängigkeit von der Entfernung und von der Geschwindigkeit (v) des Kraftfahrzeugs geschätzt wird.

3. Verfahren zum Steuern nach Anspruch 1, wobei bei dem Schritt des Detektierens (E1), (E11) das Sensorsystem eine Beleuchtungsstärke (E) des Verkehrsschilds (10) durch das Beleuchtungssystem (2) ermittelt, wobei bei dem Schritt des Schätzens (E2) der Passierdauer (TBC) eine Entfernung (d), die das Kraftfahrzeug (1) von dem Verkehrsschild trennt, in Abhängigkeit von der ermittelten Beleuchtungsstärke und von der von dem Beleuchtungssystem in Richtung des Schilds emittierten Lichtintensität (I) geschätzt wird, und wobei bei dem Schritt des Schätzens der Passierdauer die Passierdauer in Abhängigkeit von der Entfernung und von der Geschwindigkeit (v) des Kraftfahrzeugs geschätzt wird.

4. Verfahren nach einem der vorhergehenden Ansprüche, **dadurch gekennzeichnet, dass** es einen Schritt des Schätzens (E12) einer Blendungsstärke (Y) eines Fahrers des Kraftfahrzeugs (1) durch das Verkehrsschild und des Vergleichens dieser Blendungsstärke mit einem gegebenen Blendungsschwellenwert (TSy) umfasst, wobei der Schritt des Steuerns (E61, E63) von elementaren Lichtquellen ($32_{i,j}$), um in dem Lichtstrahl (HD) die Zone von geringerer Intensität ($Z_c$) zu erzeugen, an die Tatsache geknüpft ist, dass die Blendungsstärke größer als der gegebene Blendungsschwellenwert ist.

5. Verfahren nach einem der vorhergehenden Ansprüche, **dadurch gekennzeichnet, dass** es einen Schritt des Vergleichens (E5) der Passierdauer (TBC) mit einem Mindestschwellenwert ($TS_{min}$) umfasst, wobei, wenn die Passierdauer kleiner als der Mindestschwellenwert ist, bei dem Schritt des Steuerns (E61) der elementaren Lichtquellen ($32_{i,j}$) jede elementare Lichtquelle des Teils, der dazu bestimmt ist, die Zone von geringerer Intensität ($Z_c$) zu erzeugen, gesteuert wird, um einen elementaren Lichtstrahl ($HD_{i,j}$) von konstanter Intensität (I) im Zuge der Fortbewegung des Kraftfahrzeugs (1) zu dem Verkehrsschild (10) hin zu emittieren.

6. Verfahren nach einem der vorhergehenden Ansprüche, **dadurch gekennzeichnet, dass** es einen Schritt des Vergleichens (E5) der Passierdauer (TBC) mit einem Mindestschwellenwert ($TS_{min}$) umfasst, wobei, wenn die Passierdauer größer als der Mindestschwellenwert ist, bei dem Schritt des Steuerns (E63) der elementaren Lichtquellen ($32_{i,j}$) jede elementare Lichtquelle des Teils, der dazu bestimmt ist, die Zone von geringerer Intensität ($Z_c$) zu erzeugen, gesteuert wird, um einen elementaren Lichtstrahl ($HD_{i,j}$) zu emittieren, dessen Intensität (I) im Zuge der Fortbewegung des Kraftfahrzeugs (1) zu dem Verkehrsschild (10) hin abnimmt.

7. Verfahren nach dem vorhergehenden Anspruch, wobei das Verfahren einen Schritt des Auswählens (E62) eines Steuerungsgesetzes ($L_i$) aus einer Mehrzahl von Steuerungsgesetzen ($L_1$, $L_2$, $L_3$) in Abhängigkeit vom Wert der Passierdauer (TBC) umfasst, wobei jedes Steuerungsgesetz den Verlauf einer zu emittierenden Lichtintensität (I) gemäß einer wachsenden Funktion der Zeit definiert und wobei jede elementare Lichtquelle ($32_{i,j}$) des Teils, der dazu bestimmt ist, die Zone von geringerer Intensität ($Z_c$) zu erzeugen, gesteuert wird, um einen elementaren Lichtstrahl ($HD_{i,j}$) zu emittieren, dessen Intensität mittels des ausgewählten Steuerungsgesetzes in Abhängigkeit von dem Wert der verbleibenden Zeit, bevor das Kraftfahrzeug das Verkehrsschild (ttc) passiert, ermittelt wird.

8. Verfahren nach dem vorhergehenden Anspruch, wobei jedes Steuerungsgesetz ($L_i$) der Mehrzahl von Steuerungsgesetzen ($L_1$, $L_2$, $L_3$) mindestens einer unterschiedlichen Passierdauer ($TS_{min}$, $TS_1$, $TS_2$) zugeordnet ist, wobei die wachsende Funktion jedes Steuerungsgesetzes eine Wachstumsgeschwindigkeit aufweist; und dadurch, dass bei einem ersten Steuerungsgesetz, das einer Passierdauer zugeordnet ist, die größer als die einem zweiten Steuerungsgesetz zugeordnete Passierdauer ist, die Wachstumsgeschwindigkeit der wachsenden Funktion des ersten Steuerungsgesetzes geringer als diejenige des zweiten Steuerungsgesetzes ist.

9. Verfahren nach dem vorhergehenden Anspruch, wobei die wachsende Funktion jedes Steuerungsgesetzes ($L_1$, $L_2$, $L_3$) eine Potenzfunktion der Zeit (ttc) ist und ihr Exponent ($\beta_1$, $\beta_2$, $\beta_3$) der Passierdauer ($TS_{min}$, $TS_1$, $TS_2$) zugeordnet ist, die diesem Steuerungsgesetz zugeordnet ist.

10. Kraftfahrzeug (1), das ein Sensorsystem (2), ein Beleuchtungssystem (3) und eine Steuerung (4) umfasst, wobei die Steuerung dazu eingerichtet ist, das Verfahren nach einem der vorhergehenden Ansprüche durchzuführen.

**Claims**

1. A method for controlling a lighting system (3) of a motor vehicle (1), the lighting system comprising a plurality of elementary light sources ($32_{i,j}$) each selectively controllable in order to emit an elementary light beam ($HD_{i,j}$), the elementary light beams together forming a pixelated light beam (HD), the method comprising the following steps:

   a. detecting (E1) a road sign (10) by a sensor system (2) of the motor vehicle; the method being **characterized by** the following steps:
   b. estimating (E2) a passing duration (TBC) between the instant ($t_0$) the road sign is detected and a future instant ($t_1$) at which the motor vehicle will pass the detected road sign;
   c. controlling (E61, E63) the elementary light sources of the lighting system of the host vehicle in order to emit a pixelated light beam, with a portion of the elementary light sources being controlled, as a function of said passing duration, in order to generate a lower intensity zone ($Z_C$) in the light beam extending in the vicinity of the road sign.

2. The control method as claimed in the preceding claim, wherein, during the detection step (E1), (E11) the sensor system (2) estimates a distance (d) separating the motor vehicle (1) from the road sign (10), and wherein, during the step (E2) of estimating the passing duration, the passing duration (TBC) is estimated as a function of said distance and of the speed (v) of the motor vehicle.

3. The control method as claimed in claim 1, wherein, during the detection step (E1), (E11) the sensor system determines an illumination (E) of the road sign (10) by the lighting system (2), wherein, during the step (E2) of estimating the passing duration (TBC), a distance (d) separating the motor vehicle (1) from the road sign is estimated as a function of the determined illumination and of the light intensity (I) emitted by the lighting system toward the sign, and wherein, during the step of estimating the passing duration, the passing duration is estimated as a function of said distance and of the speed (v) of the motor vehicle.

4. The method as claimed in any of the preceding claims, **characterized in that** it comprises a step (E12) of estimating a glare level (Y) of a driver of the motor vehicle (1) by the road sign and of comparing this glare level with a given glare threshold ($TS_Y$), with the step (E61, E63) of controlling elementary light sources ($32_{i,j}$) in order to generate said lower intensity zone ($Z_C$) in the light beam (HD) being conditional upon the fact that the glare level is greater than the given glare threshold.

5. The method as claimed in any of the preceding claims, **characterized in that** it comprises a step (E5) of comparing the passing duration (TBC) with a minimum threshold ($TS_{min}$), wherein, if the passing duration is less than said minimum threshold, during the step (E61) of controlling the elementary light sources ($32_{i,j}$), each elementary light source of said portion intended to generate the lower intensity zone ($Z_C$) is controlled in order to emit an elementary light beam ($HD_{i,j}$) with constant intensity (I) as the motor vehicle (1) moves toward the road sign (10).

6. The method as claimed in any of the preceding claims, **characterized in that** it comprises a step (E5) of comparing the passing duration (TBC) with a minimum threshold ($TS_{min}$), wherein, if the passing duration is greater than said minimum threshold, during the step (E63) of controlling the elementary light sources ($32_{i,j}$), each elementary light source of said portion intended to generate the lower intensity zone ($Z_C$) is controlled in order to emit an elementary light beam ($HD_{i,j}$), the intensity (I) of which decreases as the motor vehicle (1) moves toward the road sign (10).

7. The method as claimed in the preceding claim, the method comprising a step (E62) of selecting a control law ($L_i$) from among a plurality of control laws ($L_1$, $L_2$, $L_3$) as a function of the value of the passing duration (TBC), with each control law defining the evolution of a light intensity (I) to be emitted according to an increasing function of time, and wherein each elementary light source ($32_{i,j}$) of said portion intended to generate the lower intensity zone ($Z_C$) is controlled in order to emit an elementary light beam ($HD_{i,j}$), the intensity of which is determined by means of the selected control law, as a function of the value of the time (ttc) remaining before the motor vehicle passes the road sign.

8. The method as claimed in the preceding claim, wherein each control law ($L_i$ of the plurality of control laws ($L_1$, $L_2$, $L_3$) is associated with at least one distinct passing duration ($TS_{min}$, $TS_1$, $TS_2$), in which the increasing function of each control law has a growth rate, and in that, for a first control law associated with a passing duration greater than the passing duration associated with a second control law, the growth rate of the increasing function of the first control law is lower than that of the second control law.

9. The method as claimed in the preceding claim, wherein the increasing function of each control law ($L_1$, $L_2$, $L_3$) is a power function of time (ttc) and the exponent ($\beta_1$, $\beta_2$, $\beta_3$) of which is associated with the passing duration ($TS_{min}$, $TS_1$, $TS_2$) associated with this control law.

10. A motor vehicle (1) comprising a sensor system (2), a lighting system (3) and a controller (4), the controller being arranged to implement the method as claimed in any of the preceding claims.

Fig. 1

Fig. 2

Fig. 3

Fig. 4

Fig. 5

Fig. 6

**RÉFÉRENCES CITÉES DANS LA DESCRIPTION**

**Documents brevets cités dans la description**

- DE 102007048717 A1
- FR 3055981 A1
- EP 2127944 A1